# EUROPÄISCHE PATENTSCHRIFT

(11) **EP 3 746 664 B1**
(45) Veröffentlichungstag und Bekanntmachung des Hinweises auf die Patenterteilung: **09.03.2022**
(21) Anmeldenummer: 19703654.4
(22) Anmeldetag: 29.01.2019
(51) Int. Cl.: F16B 5/02, F16B 43/00

(54) **MONTAGEEINHEIT**
MOUNTING UNIT
UNITÉ DE MONTAGE

(30) Priorität: 29.01.2018 DE 102018101907
(43) Veröffentlichungstag der Anmeldung: 09.12.2020
(73) Patentinhaber: Honsel Umformtechnik GmbH, 58730 Fröndenberg (DE)
(72) Erfinder: FRANKE, Timo, 59469 Ense (DE); SZCUKOWSKI, Adi, 58709 Menden (DE)
(74) Vertreter: Braun-Dullaeus, Karl-Ulrich
(86) Internationale Anmeldenummer: PCT/EP2019/052086
(87) Internationale Veröffentlichungsnummer: WO 2019/145553

(56) Entgegenhaltungen:
- EP-A2- 1 055 829
- WO-A1-2011/014384
- DE-B4- 10 254 999
- DE-T2- 69 803 520
- US-A- 4 435 112

## Beschreibung

Die Erfindung betrifft eine Montageeinheit, die insbesondere in Fertigungsstraßen bei der Autoproduktion Verwendung findet, die es ermöglicht ein Anbauteil automatisiert an einer Unterkonstruktion zu fixieren.

Industrielle Fertigungsstraßen sind heute weitgehend automatisiert, wobei ein hoher Bedarf an vorgefertigten Bauteilen besteht, die durch Roboter auf schnelle und sichere Weise miteinander verbunden werden können. Einzelne Bestandteile dieser vorgefertigten Bauteile sollten möglichst verliersicher in den Bauteilen angebracht sein, da die zur Fertigung verwendeten Roboter nicht so flexibel wie ein Mensch auf fehlende Bauteile reagieren können. Folgen können Produktionsstillstand oder fehlerhaft verbundene Bauteile sein. Werden verschiedene Bauteile zusammengesetzt, kommt es mitunter vor, dass Kräfte einer bestimmten Größe wirken, die benötigt werden um eines der Bauteile sicher zu fixieren, diese Kräfte aber so stark sind, dass ein anderes Bauteil, insbesondere das Anbauteil, hierdurch beschädigt wird.

In der Praxis werden Anbauteilen, die automatisch an Unterkonstruktion montiert werden sollen, beispielsweise an Zylinderköpfen zu fixierende Zylinderkopfdeckel, bereits im Herstellerwerk zu einer Montageeinheit vorgefertigt. Im Zuge einer Gewichtseinsparung, zum Beispiel im Automobilbau, werden zunehmend in Leichtbauweise, beispielsweise aus Kunststoff, hergestellte Anbauteile verwendet, die beim Fixieren mit der Unterkonstruktion derart verspannt werden können, dass die Anbauteile beschädigt werden. Dies wäre beispielsweise der Fall, wenn eine Schraube direkt in einem Anbauteil aus Kunststoff eingedreht werden würde, um diese an einer Unterkonstruktion zu fixieren. Es müssen daher Maßnahmen getroffen werden, die verhindern, dass die Kräfte die bei der Fixierung auftreten direkt auf die Anbauteile wirken.

Übliche Montageeinheiten sind mit einem Befestigungselement ausgestattet. Diese Befestigungselemente weisen typischerweise einen Kopfbereich, einen Schaftbereich und einen Fixierabschnitt auf. Hierbei ist der Schaftbereich zwischen dem Kopfbereich und dem Fixierabschnitt angeordnet. Typischerweise werden Schrauben als ein solches Befestigungsmittel verwendet. Ebenfalls weisen diese Montageeinheiten hülsenförmige Abstandhalter auf, wobei die Befestigungselemente verliersicher innerhalb dieser hülsenförmige Abstandhalter aufgenommen sind, um beispielsweise beim Transport nicht herausfallen zu können. Die Kräfte, welche beim Fixieren der Anbauteile entstehen und zu einer Beschädigung der Anbauteile führen könnten, werden über die hülsenförmige Abstandhalter direkt auf die Unterkonstruktion abgeleitet. Hierzu ist es notwendig, dass der hülsenförmige Abstandhalter im Endmontagezustand zumindest ein wenig über den Fixierbereich des Anbauteils übersteht, hierbei ist der hülsenförmige Abstandhalter zweckmäßigerweise verliersicher in einer Bohrung des Anbauteils axial aufgenommen. Hierdurch folgt aber, dass für das Anbauteil bei der Fixierung ein kleiner Bewegungsspielraum bis zum Kopfbereich des Befestigungselements entsteht, sodass dieses unerwünschte Bewegungen ausführen kann. Beispielsweise würde ein Zylinderkopfdeckel eines Autos bei der Fahrt immer wieder auf die Unterkonstruktion aufschlagen und hierbei eventuell beschädigt werden und unerwünschte Geräusche verursachen. Aus diesem Grund ist zwischen dem Befestigungselement und dem Anbauteil zudem ein Federelement eingebracht, welches bei der Montage an dem Anbauteil anliegt und im Zustand der Endmontage in einer Art verformt ist, dass es das Anbauteil zumindest schwingungsdämpfend kraftbeaufschlagt.

Aus US 4,435,112 ist eine aus einem Befestigungselement, einem Abstandhalter und einem scheibenförmigen Federelement gebildete Befestigungseinheit bekannt. Der Abstandhalter ist in eine Bohrung eines Anbauteils einsetzbar, welches an eine Grundkonstruktion fixiert werden soll. Das scheibenförmige Federelement ist im Endmontagezustand mit einem inneren Lochrandbereich zwischen dem Kopfbereich des Befestigungselements und der diesem zugewandten Stirnseite des Abstandhalters eingeklemmt.

DE 102 54 999 B4 zeigt eine Montageeinheit mit einem separaten Federelement, das zwischen dem hülsenförmigen Abstandshalter und dem Kopfbereich des Befestigungselements angeordnet ist und das den hülsenförmigen Abstandshalter sowohl im Vormontagezustand als auch im Endmontageszustand berührend umgreift und entlang des hülsenförmigen Abstandhalters axial verschieblich angebracht ist. Bei der Montage liegt eine Teilfläche dieses Federelements auf dem Anbauteil auf und wird bei der Fixierung des Befestigungselements in einer Art verformt, dass das Anbauteil schwingungsdämpfend kraftbeaufschlagt wird. Um das Befestigungselement verliersicher innerhalb des hülsenförmige Abstandhalters aufzunehmen, weist der hülsenförmige Abstandhalter an seinem dem Kopf des Befestigungselements zugewandten Ende radial nach innen weisende Vorsprünge auf, die einen axialwirksamen Hinterschnitt mit einem Ringvorsprung des Befestigungselementes ausbilden. Die Fertigung eines derartigen hülsenförmige Abstandhalter ist sehr aufwendig, da der Abstandhalter nicht auf einfache Weise, beispielsweise von einem längeren zylinderförmigen Rohr, abgeschnitten oder absägt werden kann, wodurch die Produktionskosten für dieses Bauteil prozentual signifikant erhöht sind. Auch ist die Montage des Federelementes verhältnismäßig aufwendig.

Aufgabe der Erfindung ist es, eine alternativ gestaltete Montageeinheit anzugeben. Diese Aufgabe wird durch eine Montageeinheit nach Anspruch 1 gelöst. Erfindungsgemäß umfasst eine Montageeinheit ein Anbauteil, das zur Fixierung an einer Unterkonstruktion wenigstens eine Bohrung aufweist, einen hülsenförmigen Abstandhalter, der in der Bohrung des Anbauteils gehalten ist und ein Befestigungselement, insbesondere eine Schraube, das an seinem einen Ende einen Kopf aufweist und an seinem anderen Ende einen mit einer Bohrung der Unterkonstruktion zusammenwirkenden Fixierabschnitt, insbesondere ein Schraubengewinde, trägt, wobei das Befestigungselement mit einem Schaft, der sich zwischen dem Kopf und dem Fixierabschnitt befindet, den Abstandhalter axial beweglich durchsetzt. Zudem weist die Montageeinheit ein mit einer Außenfläche zum Anbauteil konkav hin gewölbtes Federelement auf, das auf die dem Kopf des Befestigungselements zugewandte stirnseitige Ringfläche des hülsenförmigen Abstandhalters aufgesetzt ist und sich im Montagezustand auf dem Anbauteil abstützt. Die Wölbung muss nicht stetig sein, sondern kann auch durch eine oder mehrere Kegelflächen angenähert werden. Hierbei weist das Federelement an seiner dem Kopf des Befestigungselements abgewandten Unterseite äußere Federzungen auf, die im aufgesetzten Zustand selbsthemmend an den Umfang des hülsenförmigen Abstandhalters anliegen. Bevorzugt weist das auf dieser Unterseite eine konkave Wölbung auf. Die radiale Länge bzw. Ausdehnung des Federelements geht über die stirnseitige Ringfläche des hülsenförmigen Abstandhalters hinaus, sodass das Federelement radial übersteht. Durch die beschriebene konkave Krümmung wird ermöglicht, dass ein radialer äußerer Randbereich des Federelements in eine Ebene hineinragt, die parallel zu dem Grundkörper des hülsenförmigen Abstandhalters ist. Mit anderen Worten befindet sich dieser radiale äußere Randbereich des Federelementes also auf einem Höhenlevel unter der Ebene der stirnseitigen Ringfläche des Abstandhalters. Hierdurch wird ermöglicht, dass das Federelement das Anbauteil auch dann kraftbeaufschlagt, wenn die Länge der Bohrung des Anbauteils, in die der hülsenförmige Abstandhalter aufgenommen ist, kleiner ist als die Länge des hülsenförmigen Abstandhalters auf dem das Befestigungselement fixiert, insbesondere aufgeschraubt, wird.

Ein weiterer Vorteil ist, dass durch die äußeren Federzungen im Montagezustand, wobei der Montagezustand gelegentlich auch als Endmontageszustand bezeichnet wird, verhindert wird, dass das Federelement sich wieder von dem hülsenförmigen Abstandhalter lösen kann. Es ist also verliersicher angebracht, ohne dass es hierzu nötig ist, den hülsenförmigen Abstandhalters in irgendeiner Art und Weise speziell zu bearbeiten, sodass ein Ablösen des Federelements aus dem Montagezustand verhindert wird. Dies ermöglicht, dass die hülsenförmigen Abstandhalter deutlich preisgünstiger und einfacher produziert werden können. Beispielsweise durch ein einfaches Abschneiden von einem langen metallischen Hohlzylindergrundkörper, wobei je nach Einsatzzweck auch andere Materialien geeignet sein können. Bevorzugte Materialien sind gehärteter, ungehärteter Stahl sowie Aluminium.

Vorteilhaft ist das Federelement im Montagezustand zwischen der stirnseitigen Ringfläche des hülsenförmigen Abstandhalters und dem Kopf des Befestigungselements eingeklemmt. Hierdurch wird für das Federelement ein unbewegliches Widerlager zur Verfügung gestellt, sodass das Federelement selbst nicht hin und her wackelt und dadurch das Anbauteil gleichmäßig kraftbeaufschlagen kann, sodass dieses zuverlässig schwingungsgedämpft wird. Wäre das Federelement in seiner Lage nicht sicher fixiert, würde sich dessen Bewegung auch auf das Anbauteil übertragen.

In einer vorteilhaften Ausgestaltung der Erfindung ist das Federelement einstückig als gewölbte Ringscheibe ausgebildet, wobei die äußeren Federzungen durch Ausnehmungen in der Scheibenfläche definiert sind. Hierbei ist die Wölbung der Federzungen weniger stark ausgeprägt als die Wölbung der Ringscheibe an den entsprechenden radialen Positionen, sodass die Federzungen in einen inneren Bereich der Ringscheibe der Unterseite hineinragen und dadurch in Kontakt mit dem hülsenförmigen Abstandhalter gelangen können. Die einstückige Fertigung ermöglicht zum einen eine ökonomische Herstellung der Ringscheibe, da die Anzahl der Produktionsschritte vermindert wird. Der materialefreie innere Bereich der gewölbten Ringscheibe weist einen Radius auf, der zumindest so groß ist, dass dieser Bereich von dem Schaft des Befestigung Elements axial durchsetzbar ist.

Bevorzugt sind die äußeren Federzungen in einem Anstellwinkel gegen die Aufsatzrichtung zum Kopf des Befestigungselementes hin angestellt. Hierdurch wird insbesondere der selbsthemmende Reibungsschluss erzielt, falls eine Kraft entgegen der Aufsatzrichtung auf das Federelement wirkt und gleichzeitig ermöglicht, dass das Federelement leicht auf den Abstandhalter aufgebracht werden kann. Mit anderen Worten, durch die äußeren Federzungen wird die eine axiale Verschieblichkeit in Aufsatzrichtung ermöglicht und einer axialen Verschieblichkeit entgegen der Aufsatzrichtung wird gehemmt. Die axiale Verschieblichkeit in Aufsatzrichtung des Federelement wird bevorzugt dadurch begrenzt, dass der innere Radius der Ringscheibe des Federelements kleiner ist als der Radius des bevorzugt hohlzylinderförmigen Abstandhalters, sodass das Federelement auf der stirnseitigen Ringfläche das Abstandhalters aufsitzt.

Vorzugsweise weist das Federelement innere Federzungen auf, die im aufgesetzten Zustand in die Bohrung des hülsenförmigen Abstandhalters hineinragen und das eingesteckte Befestigungselement verliersicher halten. Diese inneren Federzungen ragen also in den materialfreien inneren Bereich der gewölbten Ringscheibe so weit hinein, dass sie in einen Reib- oder Formschluss mit dem Befestigungselement gelangen. Diese Verliersicherung wird ermöglicht, ohne dass es hierzu nötig ist, eine aufwändige Hinterschnittanordnung im Inneren des hülsenförmigen Abstandhalters anzubringen, die an dem Befestigungselement eingreift. Dies ermöglicht, dass die hülsenförmigen Abstandhalter deutlich preisgünstiger und einfacher produziert werden können.

Es ist vorteilhaft, das Federelement aus einem Metall, insbesondere aus einem gehärteten Stahl, durch Stanzbiegen zu fertigen. Dies ermöglicht, dass das Federelement sowohl die gewünschten Eigenschaften in Bezug auf die Federkonstante aufweist als auch die nötige Robustheit unter verschiedenen Verwendungsbedingungen. So könnte ein Material aus Plastik beispielsweise bei hohen Temperaturen leichter schmelzen.

Bevorzugt sind die inneren und/oder äußeren Federzungen durch Stanzen oder Schneiden aus der Scheibenfläche herausgearbeitet. Dies ermöglicht eine besonders effiziente Möglichkeit, die Federelemente unter Ausbildung der entsprechenden Federzungen einstückig zu fertigen.

Der hülsenförmige Abstandhalter kann ein Zuschnitt aus einem Rohr sein, das einen geschlossenen oder einen offenen Umfang hat. Die Eröffnung beider Möglichkeiten ermöglicht eine größere Flexibilität bei der Produktion des hülsenförmigen Abstandhalters.

Zweckmäßigerweise weist der Abstandhalter auf der äußeren Umfangsfläche Erhebungen auf. Dies ermöglicht vorteilhaft, dass der Abstandhalter verliersicher in der Bohrung des Anbauteils, beispielsweise durch einen Hinterschnitt, gehalten wird.

Weitere Vorteile, Eigenschaften und Weiterbildung der Erfindung ergeben sich aus den abhängigen Ansprüchen sowie aus der nachstehenden Beschreibung eines bevorzugten Ausführungsbeispiels.

Die Erfindung wird nachstehend unter Bezugnahme auf die anliegenden Zeichnungen anhand eines bevorzugten Ausführungsbeispiels näher erläutert.
- Fig. 1: zeigt in einer perspektivischen Darstellung ein Federelement und einen Abstandhalter der erfindungsgemäßen Montageeinheit.
- Fig. 2: zeigt in einer perspektivischen Darstellung zusätzlich zu Fig. 1 ein in die Montageeinheit eingebrachtes Befestigungselement in einem Vormontagezustand der Montageeinheit.
- Fig. 3a: zeigt in einem Querschnitt die Montageeinheit inklusive eines Anbauteils in einem Vormontagezustand.
- Fig. 3b: zeigt einen vergrößerten Ausschnitt des Federelements aus Fig. 3a.
- Fig. 4a: zeigt in einem Querschnitt die Montageeinheit inklusive des Anbauteils in einem Endmontagezustand.
- Fig. 4b: zeigt einen vergrößerten Ausschnitt des Federelements aus Fig. 4a.

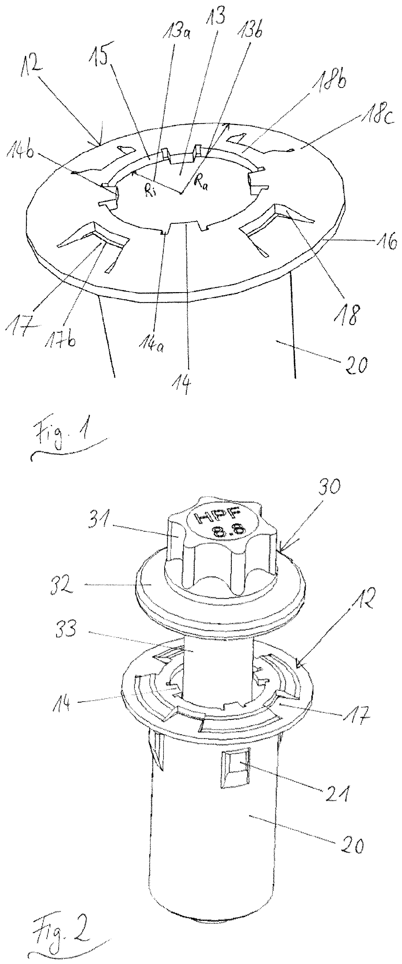

Fig. 1 zeigt in einer perspektivischen Darstellung ein einstückig gefertigtes Federelement 12 das auf einen hülsenförmigen Abstandhalter 20 der erfindungsgemäßen Montageeinheit 10 aufgebracht ist. Die zentrale Längsachse durch den hülsenförmigen Abstandhalter legt im Folgenden die axiale Richtung fest.

Das Federelement 12 weist die Form einer gewölbten Ringscheibe mit einer zentralen, weitestgehend kreisförmigen, inneren Ausnehmung 13 auf, die einen inneren Umfang 15 der Ringscheibe begrenzt. Der innere Umfang 15 wird durch einen Radius Ri 13a festgelegt, wobei der äußere Umfang des Federelements durch einen Radius Ra 13b gekennzeichnet ist. In den Bereich der inneren Ausnehmung 13 ragen in radialer Richtung vier innere Federzungen 14 hinein, wobei jede der Federzungen 14 zwischen zwei talartigen Vertiefungen 14a angeordnet ist, die in den inneren Umfang 15 eingebracht sind. Die talartigen Vertiefungen 14a weisen allerdings jedoch nur eine geringe Breite auf - in der Summe bevorzugt weniger als 5°% des inneren Umfangs 15. In Umfangsrichtung um etwa 45° gegenüber den inneren Federzungen 14 versetzt, sind vier äußere Federzungen 17 angeordnet, wobei die vier äußere Federzungen 17 radial etwa in der Mitte der Ringscheibe im Bereich der Wölbung 18 eingearbeitet sind.

Die Wölbung 18 weist bevorzugt einen Winkel von etwa 20° Steigung in radialer Richtung von außen nach innen auf und ist durch einen ebenen inneren Ringbereich 18b äußeren ebenen Ringbereich 18c begrenzt. Der ebene innere Ringbereich 18b liegt auf der einem Kopf 31 eines Befestigungselements 30 zugewandte stirnseitige Ringfläche 20a des Abstandhalters 20 auf, wohingegen der äußere ebene Ringbereich 18c ein Anbauteil 40 flächig kraftbeaufschlagt, wobei das Anbauteil 40 ein Hohlkörper ist, dessen Wandungen aus Kunststoff ausgebildet sind. Die Wölbung 18 führt dazu, dass der innere Ringbereich 18b auf der stirnseitigen Ringfläche 20a aufliegt und der äußere ebene Ringbereich 18c in einer Ebene gehalten wird, die parallel zu dem Grundkörper des hülsenförmigen Abstandhalters 20 ist und somit unter der stirnseitigen Ringfläche 20a liegt. Hierbei entsteht also ein axialer Höhenversatz 45.

Sowohl die inneren Federzungen 14 als auch die äußeren Federzungen 17 weisen in Richtung des Mittelpunktes der Ringscheibe jeweils abgerundete Umfangsflächen 14b, 17b auf, wobei die abgerundete Umfangsflächen 14b der inneren Federzungen an die Form des Befestigungselementes und die abgerundete Umfangsflächen 17b der äußeren Federzungen an die Form des hülsenförmigen Abstandhalters 20 angepasst ist, sodass sich eine möglichst große gemeinsame Fläche für den jeweiligen Reibungsschluss ergibt. Je größer die abgerundeten Umfangsflächen 14b, 17b in Umfangsrichtung ausgestaltet sind, desto stärker wirkt der Reib- respektive Formschluss. Bevorzugt nehmen die abgerundeten Umfangsflächen 14b, 17b in Umfangsrichtung 10 %-50 % und besonders bevorzugt 25 %-35 % des jeweiligen Gesamtumfangs ein.

In Fig. 1 ist zu sehen, dass die äußeren Federzungen 17 in Reibschluss mit dem hülsenförmigen Abstandhalter 20 sind, wodurch das Federelement 12 verliersicher an den hülsenförmigen Abstandhalter 20 angebracht ist. Alternativ können anstatt vier inneren Federzungen 14 und vier äußeren Federzungen 17 auch jeweils drei innere Federzungen 14 und drei innere Federzungen 17 verwendet werden, wodurch eine bessere Haltbarkeit bedingt wird und das Federelement 12 noch einfacher herzustellen ist.

Fig. 2 zeigt in einer perspektivischen Darstellung, zusätzlich zu Fig. 1, ein in die Montageeinheit 10 eingebrachtes Befestigungselement 30 in einem Vormontagezustand der Montageeinheit 10. Bevorzugt ist das Befestigungselement 30 als eine Schraube 30 ausgebildet, wobei unter anderem die Verwendung von beispielsweise M6, M8 und M10 Schraubengrößen vorgesehen ist.

Die Schraube 30 weist einen Kopf 31 auf, der von einem scheibenförmigen Flansch 32 begrenzt wird. An den Flansch 32 schließt sich der Schaft 33 der Schraube 30 an, der auf der dem Kopf 31 entgegengesetzten Seite durch einen Fixierabschnitt 34, hier als Gewinde 34 vorliegend, begrenzt wird. Die Schraube 30 ist gewindeseitig durch die Ausnehmung 13 in den hülsenförmigen Abstandhalter 20 eingebracht. Fig. 2 zeigt, wie die inneren Federzungen 14 einen Reib- respektive Formschluss mit dem Schaft 33 ausbilden, sodass die Schraube 30 im Vormontagezustand verliersicher in dem hülsenförmigen Abstandhalter 20 aufgenommen ist. Alternativ kann auch vorgesehen sind, dass die inneren Federzungen 14 insbesondere einen Reib- respektive Formschluss mit dem Gewinde 34 bilden. In Fig. 2 sind Erhebungen 21 an der äußeren Fläche des hülsenförmigen Abstandhalters 20 vorgesehen, sodass ein Hinterschnitt zwischen dem hülsenförmigen Abstandhalter 20 und einer Bohrung 41 des Anbauteils 40 ausgebildet werden kann, sodass zudem der hülsenförmige Abstandhalter 20 verliersicher in dem Anbauteil aufgenommen ist.

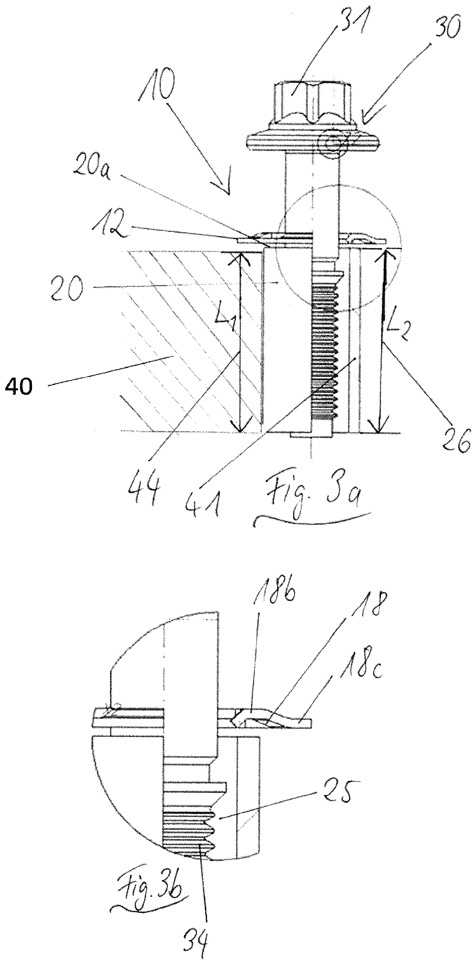

Fig. 3a zeigt die Montageeinheit 10 in einem Querschnitt inklusive des Anbauteils 40 in einem Zustand, in dem das Federelement 12 noch nicht - wie im späteren Vormontagezustand - vollständig auf die Ringfläche 20a des Abstandshaltes 20 aufgesetzt ist. Der hülsenförmige Abstandhalter 20 ist in die Bohrung 41 des Anbauteils 40 eingebracht. Es ist zu sehen, dass zwischen dem Schaft 33 und eine Innenwandung des hülsenförmigen Abstandhalters ein Radialspiel 25 vorgesehen ist, wodurch ein Mittenversatz zwischen der Bohrung des Anbauteils und einer nicht gezeigten Unterbohrung einer Unterkonstruktion ausgeglichen werden kann. Die axiale Länge der Bohrung L1 44 des Anbauteils 40 ist kürzer, vorzugsweise um wenige Millimeter, als die Länge L2 26 des hülsenförmigen Abstandhalters 20. Hierdurch wird der vorstehend beschriebene axialer Höhenversatz 45 ermöglicht. In einer vergrößerten Darstellung zeigt Fig. 3b die in Richtung Kopf 31 gerichtete Wölbung 18 des Federelements 12.

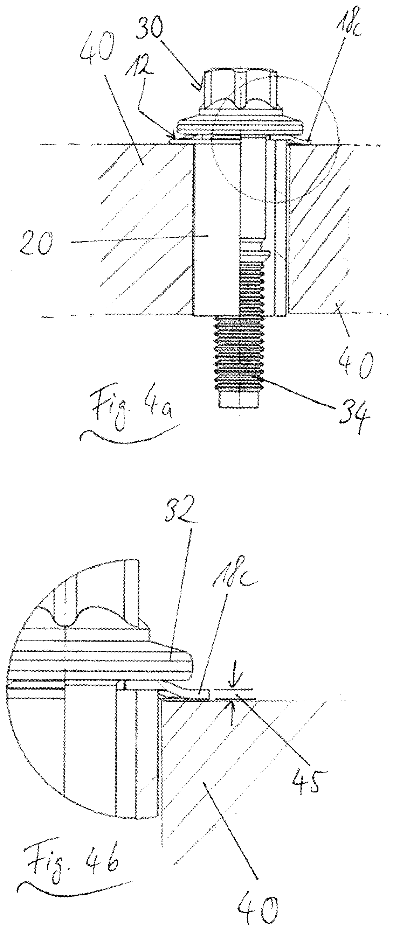

Fig. 4a zeigt die Montageeinheit 10 in einem Querschnitt in einem Endmontagezustand für den Fall, dass das Gewinde 34 in ein entsprechendes nicht gezeigtes Gegengewinde der Unterkonstruktion eingeschraubt und dort fixiert ist. In der vergrößerten Darstellung in Fig. 4b ist zu sehen, dass die Schraube 30 in einer Weise in die Unterkonstruktion eingeschraubt ist, dass das Federelement 12 zwischen dem Flansch 32 und der stirnseitigen Ringfläche des hülsenförmigen Abstandhalters 20 eingeklemmt ist. Die hierbei ausgeübten Kräfte sind stark genug, dass die Wölbung 18 im inneren radialen Bereich 18b zumindest teilweise geebnet wird und der innere radiale Bereich 18b flach auf der stirnseitigen Ringfläche des hülsenförmigen Abstandhalters 20 aufliegt bzw. eingeklemmt ist. Durch dieses Einklemmen des inneren radialen Bereiches 18b wird ein Widerlager für das Federelement 12 ausgebildet, sodass dieses, bedingt durch den axialen Versatz 45, das Anbauteil 40 kraftbeaufschlagt und damit das Anbauteil 40 zumindest schwingungsdämpfend auf die nicht gezeigte Unterkonstruktion aufdrückt. Die Kräfte, welche durch das Federelement 12 auf das Anbauteil 40 wirken, sind jedoch viel geringer als die Kräfte, die wirken würden, wenn die Schraube 34 direkt, ohne hülsenförmigen Abstandhalter 20, auf das Anbauteil 40 geschraubt werden würde. Hierdurch ermöglicht die Erfindung, dass das Anbauteil 40 sicher auf der Unterkonstruktion fixiert werden kann, ohne dieses hierbei zu beschädigen. Die Federkraft des Federelements 32 kann durch die Auswahl des Materials, der Größe des Radius Ra 13b als auch durch die Dicke 16 des Federelements 32 verändert werden. Die Dicke 16 des Federelements 32 kann 0,1 mm bis 2 mm und bevorzugt 0,3 mm bis 0,5 mm betragen.

## Patentansprüche

1. Montageeinheit mit einem Anbauteil (40), das zur Fixierung an einer Unterkonstruktion wenigstens eine Bohrung (41) aufweist, umfassend einen hülsenförmigen Abstandhalter (20), der in der Bohrung (41) des Anbauteiles (20) gehalten ist, umfassend ein Befestigungselement (30), insbesondere eine Schraube (30), das an seinem einen Ende einen Kopf (31) und an seinem anderen Ende einen mit einer Bohrung der Unterkonstruktion zusammenwirkenden Fixierabschnitt (34) trägt, wobei das Befestigungselement (30) mit einem Schaft (33) den Abstandhalter (20) axial beweglich durchsetzt,
**gekennzeichnet durch**,
ein zum Anbauteil (40) hin gewölbtes Federelement (12), das auf die dem Kopf (31) des Befestigungselementes (30) zugewandte stirnseitige Ringfläche (20a) des hülsenförmigen Abstandhalters (20) aufgesetzt ist und sich im Montagezustand auf dem Anbauteil (40) abstützt, wobei das Federelement (12) an seiner Unterseite äußere Federzungen (17) aufweist, die im aufgesetzten Zustand selbsthemmend an den Umfang des hülsenförmigen Abstandhalters (20) anliegen.

2. Montageeinheit nach Anspruch 1,
**dadurch gekennzeichnet,**
**dass** das Federelement (12) im Montagezustand zwischen der stirnseitigen Ringfläche (20a) des hülsenförmigen Abstandhalters und dem Kopf (31) des Befestigungselementes (30) eingeklemmt ist.

3. Montageeinheit nach Anspruch 1 oder 2,
**dadurch gekennzeichnet,**
**dass** das Federelement (12) einstückig als gewölbte Ringscheibe ausgebildet ist, wobei die äußeren Federzungen (17) durch Ausnehmungen in der Scheibenfläche definiert sind.

4. Montageeinheit nach Anspruch 3,
**dadurch gekennzeichnet,**
**dass** die äußeren Federzungen (17) in einem Anstellwinkel gegen die Aufsetzrichtung zum Kopf (31) des Befestigungselementes (30) hin angestellt sind.

5. Montageeinheit nach einem der vorherigen Ansprüche,
**dadurch gekennzeichnet,**
**dass** das Federelement (12) innere Federzungen (14) aufweist, die im aufgesetzten Zustand in die Bohrung des hülsenförmigen Abstandhalters (20) hinein ragen und das eingesteckte Befestigungselement (30) verliersicher halten.

6. Montageeinheit nach einem der vorherigen Ansprüche,
**dadurch gekennzeichnet,**
**dass** das Federelement (12) aus einem Metall, insbesondere aus einem gehärtetem Stahl, durch Stanzbiegen gefertigt ist.

7. Montageeinheit nach einem der vorherigen Ansprüche,
**dadurch gekennzeichnet,**
**dass** die inneren und/oder äußeren Federzungen (14, 17) durch Stanzen oder Schneiden aus der Scheibenfläche herausgearbeitet sind.

8. Montageeinheit nach einem der vorherigen Ansprüche,
**dadurch gekennzeichnet,**
**dass** der hülsenförmige Abstandshalter (20) ein Zuschnitt aus einem Rohr ist, das einen geschlossenen oder einen offenen Umfang hat.

9. Montageeinheit nach einem der vorherigen Ansprüche,
**dadurch gekennzeichnet,**
**dass** der Abstandshalter (20) auf der Umfangsfläche Erhebungen (21) aufweist, die einen verliersicheren Halt in der Bohrung des Anbauteiles (40) gewährleisten.

## Claims

1. Mounting unit with an attachment part (40) which has at least one bore (41) for fastening to a substructure, comprising a sleeve-shaped spacer (20) which is held in the bore (41) of the attachment part (20), comprising a fastening element (30), in particular a screw (30), which has a head (31) on its one end and a fastening section (34) interacting with a bore of the substructure on its other end, wherein the fastening element (30) penetrates the spacer (20) with a shaft (33) in an axially movable way,
**characterized by**
a spring element (12), which is curved toward the attachment part (40), is placed on the annular surface (20a) of an end face of the sleeve-shaped spacer (20) facing the head (31) of the fastening element (30), and is supported in the mounted state on the attachment part (40), wherein the spring element (12) has outer spring tabs (17) on its under side, which, in the installed state, contact the periphery of the sleeve-shaped spacer (20) in a self-locking way.

2. Mounting unit according to claim 1,
**characterized in that**
in the mounted state, the spring element (12) is clamped between the annular surface (20a) of an end face of the sleeve-shaped spacer and the head (31) of the fastening element (30).

3. Mounting unit according to claim 1 or 2,
**characterized in that**
the spring element (12) is intrinsically designed as a curved annular disk, wherein the outer spring tabs (17) are defined by recesses in the disk surface.

4. Mounting unit according to claim 3,
**characterized in that**
the outer spring tabs (17) are set at a pitch angle against the installation direction at the head (31) of the fastening element (30).

5. Mounting unit according to one of the preceding claims,
**characterized in that**
the spring element (12) has inner spring tabs (14), which, in the installed state, project inward into the bore of the sleeve-shaped spacer (20) and hold the inserted fastening element (30) in a captive manner.

6. Mounting unit according to one of the preceding claims,
**characterized in that**
the spring element (12) is manufactured from a metal, in particular from a hardened steel, by punching and bending.

7. Mounting unit according to one of the preceding claims,
**characterized in that**
the inner and/or outer spring tabs (14, 17) are machined out of the disk surface by punching or cutting.

8. Mounting unit according to one of the preceding claims,
**characterized in that**
the sleeve-shaped spacer (20) is a section from a tube which has a closed or an open periphery.

9. Mounting unit according to one of the preceding claims,
**characterized in that**
the spacer (20) has elevations (21) on the peripheral surface, which guarantee a captive holding in the bore of the attachment part (40).

## Revendications

1. Unité de montage avec un composant rapporté(40), qui comporte au moins un alésage (41) pour la fixation sur une sous-structure, comprenant une écarteur en forme de manchon (20), qui est maintenu dans l'alésage (41) du composant rapporté (20), comprenant un élément de fixation (30) , en particulier une vis (30), qui porte à une de ses extrémités une tête (31) et à son autre extrémité une section de fixation (34) coopérant avec un alésage de la sous-structure, sachant que l'élément de fixation (30) traverse l'écarteur (20) avec une tige (33)
**caractérisée par**
un élément faisant ressort (12) bombé en direction du composant rapporté (40), qui est posé sur la face annulaire (20a) frontale tournée vers la tête (31) de l'élément de fixation (30) de l'écarteur en forme de manchon (20) et prend appui à l'état de montage sur la composant rapporté (40), sachant que l'élément faisant ressort (12) comporte sur sa face inférieure des languettes de ressort (17) extérieures, qui reposent à l'état posé de façon autobloquante sur la périphérie de l'écarteur en forme de manchon (20).

2. Unité de montage selon la revendication 1, **caractérisée en ce que**
l'élément faisant ressort (12) est enserré à l'état de montage entre la face annulaire (20a) frontale de l'écarteur en forme de manchon et la tête (31) de l'élément de fixation (30).

3. Unité de montage selon la revendication 1 ou 2, **caractérisée en ce que**
l'élément faisant ressort (12) est constitué en une pièce sous la forme d'un disque annulaire bombé, sachant que les languettes de ressort (17) extérieures sont définies par des évidements dans la surface de disque.

4. Unité de montage selon la revendication 3, **caractérisée en ce que**
les languettes de ressort (17) extérieures sont placées dans un angle d'incidence opposé à la direction de pose en direction de la tête (31) de l'élément de fixation (30) .

5. Unité de montage selon l'une quelconque des revendications précédentes,
**caractérisée en ce que**
l'élément faisant ressort (12) comporte des languettes de ressort (14) intérieures , qui font saillie à l'état posé dans l'alésage de l'écarteur en forme de manchon (20) et maintiennent de façon inamovible l'élément de fixation (30) emmanché.

6. Unité de montage selon la revendication l'une quelconque des revendications précédentes,
**caractérisée en ce que**
l'élément faisant ressort (12) est élaboré par pliage estampage dans un métal, en particulier dans un acier trempé.

7. Unité de montage selon l'une quelconque des revendications précédentes,
**caractérisée en ce que**
les languettes de ressort intérieures et/ou extérieures (14, 17) sont élaborées par estampage ou découpe à partir de la surface de disque.

8. Unité de montage selon l'une quelconque des revendications précédentes,
**caractérisée en ce que**
l'écarteur en forme de manchon (20) est un tronçon d'un tube, qui possède une périphérie fermée ou une périphérie ouverte.

9. Unité de montage selon l'une quelconque des revendications précédentes,
**caractérisée en ce que**
l'écarteur (20) comporte sur la surface périphérique des bossages (21), qui garantissent un maintien inamovible dans l'alésage du composant rapporté(40).
